# EUROPÄISCHE PATENTSCHRIFT

(11) **EP 1 444 893 B1**
(45) Veröffentlichungstag und Bekanntmachung des Hinweises auf die Patenterteilung: **23.08.2006**
(21) Anmeldenummer: 04001277.5
(22) Anmeldetag: 22.01.2004
(51) Int. Cl.: A01M 7/00, F16K 35/00

(54) **Landwirtschaftliche Feldspritze**
Agricultural sprayer
Pulvérisateur agricole

(30) Priorität: 01.02.2003 DE 10304047
(43) Veröffentlichungstag der Anmeldung: 11.08.2004
(73) Patentinhaber: Amazonen-Werke H. Dreyer GmbH & Co. KG, 49205 Hasbergen (DE)
(72) Erfinder: Wiemeyer, Benno, 49504 Lotte-Halen (DE); Kirsten, Eckart, 04205 Leipzig (DE)

(56) Entgegenhaltungen:
- EP-A- 0 428 966
- EP-A- 0 623 280
- DE-A- 2 439 248
- DE-A- 2 554 713
- DE-A- 3 807 099

## Beschreibung

Die Erfindung betrifft eine landwirtschaftliche Feldspritze gemäß des Oberbegriffes des Patentanspruches 1.

Derartige Feldspritzen sind in der Landwirtschaft in vielfältiger Ausgestaltung im Einsatz.

Derartige landwirtschaftliche Feldspritzen weisen eine Vielzahl von Betätigungshähnen auf. Für den jeweiligen Anwendungsfall, bzw. Betriebsart der Spritze, wie Behälter füllen, Material einspülen, Feldspritze reinigen oder das Anwendungsmittel im Spritzbetrieb ausbringen, müssen eine Vielzahl von Hähnen bzw. Ventile richtig eingestellt werden.

Um Fehlbedienungen zu vermeiden, schlägt beispielsweise die EP 06 23 280 B1 vor, eine elektronische Überwachungseinrichtung einzusetzen. Eine derartige elektronische Überwachungseinrichtung ist relativ teuer und insbesondere bei preiswerten und kleineren Feldspritzen nicht wirtschaftlich einzusetzen.

Der Erfindung liegt die Aufgabe zugrunde, mit einfachen Mitteln mögliche Fehlbedienungen und Fehleinstellungen zumindest auf der Druckseite der Feldspritzleitungen zu vermeiden.

Diese Aufgabe wird erfindungsgemäß durch die kennzeichnenden Merkmale des Patentanspruches 1 gelöst. Infolge dieser Maßnahmen wird durch die Abdeckscheiben bzw. durch den Durchbruch, der sich in der Abdeckscheibe befindet, immer nur das für die gewünschte Betriebsart erforderlichenfalls einzustellende Absperrventil bzw. das Betätigungselement des Absperrventils für die Handbetätigung freigegeben. Die übrigen Betätigungselemente der Absperrventile werden durch die Abdeckscheibe abgedeckt, so dass der Bediener sie nicht erreichen kann.

In einer weiteren Ausgestaltung der Erfindung ist vorgesehen, dass eine mit dem Rahmen verbundene Abdeckwand vorgesehen ist, dass hinter der Abdeckwand die Ventile und Abzweigleitungen angeordnet sind, dass die Abdeckwand zumindest einen Ausschnitt aufweist, durch den die Ventilwelle des Verteilerventils ragt, dass der Betätigungshebel vor der Abdeckwand angeordnet ist. Infolge dieser Maßnahmen lässt sich die Abdeckscheibe auch bei Feldspritzen an der Ventilwelle befestigen, wenn sich die Ventile und Leitungen hinter einer Abdeckwand der Feldspritze befinden.

Weitere Einzelheiten der Erfindung sind der Beispielsbeschreibung und den Zeichnungen zu entnehmen. Hierbei zeigen
- Fig. 1: den Flüssigkeitsplan der Feldspritze in schematischer Darstellungsweise,
- Fig. 2: die Anordnung des Verteilerventils mit den daran angeschlossenen Leitungen und den Leitungen zugeordneten Absperrventilen in der Ansicht II-II,
- Fig. 3: die Anordnung des Verteilerventils mit Abdeckscheiben in der Vorderansicht,
- Fig. 4: die Anordnung des Verteilerventils in der Ansicht IV-IV,
- Fig. 5: das Verteilerventil entsprechend Fig. 3, jedoch mit einer anderen Einstellung,
- Fig. 6: das Verteilerventil entsprechend Fig. 3, jedoch mit einer anderen Einstellung,
- Fig. 7: das Verteilerventil entsprechend Fig. 3, jedoch mit einer anderen Einstellung,
- Fig. 8: eine weitere Anordnung des Verteilerventils in Verbindung mit einer Abdeckwand in der Vorderansicht und
- Fig. 9: die Anordnung des Verteilerventils gemäß Fig. 8 in der Ansicht IX-IX.

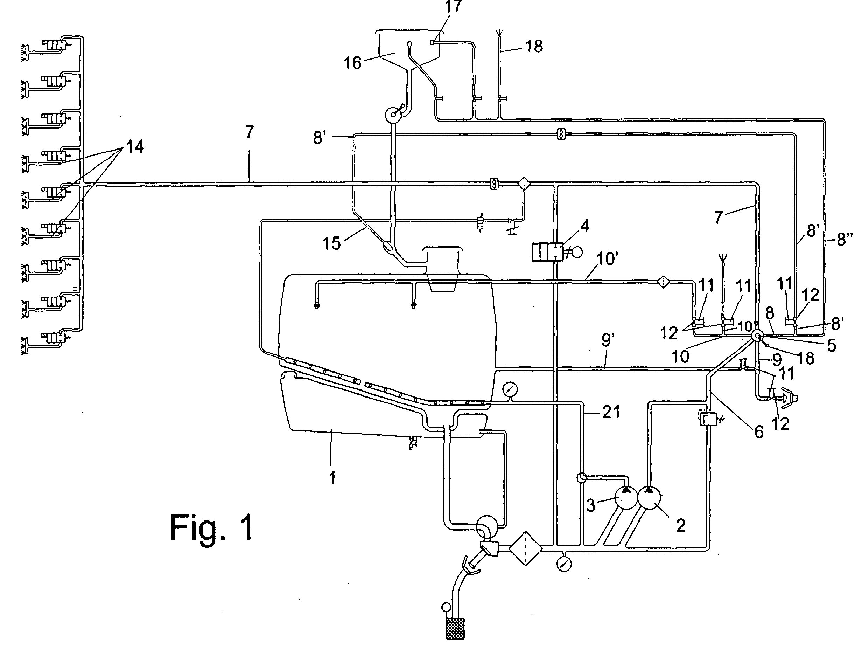

Die Feldspritze weist entsprechend des Funktionsschemas nach Fig. 1 u.a. einen Flüssigkeitstank 1, die beiden motorisch angetriebenen Pumpen 2 und 3, ein Druckregelventil 4, welches motorisch einstellbar ist, die von der Pumpe 2 zu dem Verteilerventil 5 führende Druckleitung 6,7,8,10 auf. Von dem Verteilerventil 5 führen Abzweigleitungen, denen teilweise Handbestätigungselemente 11 aufweisende Absperrventile 12 zugeordnet sind. Die Abzweigleitung 7 führt über das Druckregelventil 13 zu den einzelnen Teilbreitenleitungen 14 des Spritzgestänges. Die Teilleitung 8x führt von dem Verteilerventil über eine Abzweigung zu dem Einspülinjektor 15 des Einspülbehälters 16 und die weitere Leitung 8*''* zu der Einspülvorrichtung des Einspülbehälters 16, der Ringleitung 17 des Einspülbehälters 16 und zu dem Reinigungsschlauch 18 der Einspülvorrichtung 16. In der zu dem Einspülinjektor 15 führenden Leitung 8' ist das das Handbetätigungslement 11 aufweisende Absperrventil 12 in der Nähe des Verteilerventils 5 angeordnet. Die Abzweigleitung 9 führt über eine Verzweigung zu der Behälterfüllleitung 9' und zu einer weiteren Füllleitung 9*"* für weitere Behältnisse. Diesen beiden Leitungen 9' und 9" sind in der Nähe des Verteilerventils 5 angeordnete, Handbetätigungselemente 11 aufweisende Absperrventile 12 angeordnet. Die Abzweigleitung 10 führt von dem Verteilerventil 5 über eine Verzweigung zu der Innenreinigungsleitung 10' des Flüssigkeitsbehälter 1 und der Außenreinigungsleitung 10". Diesen beiden Reinigungsleitungen 10' und 10" sind wiederum in der Nähe des Verteilerventils 5 angeordnete Handbetätigungselemente 11 aufweisende Absperrventile 12 zugeordnet.

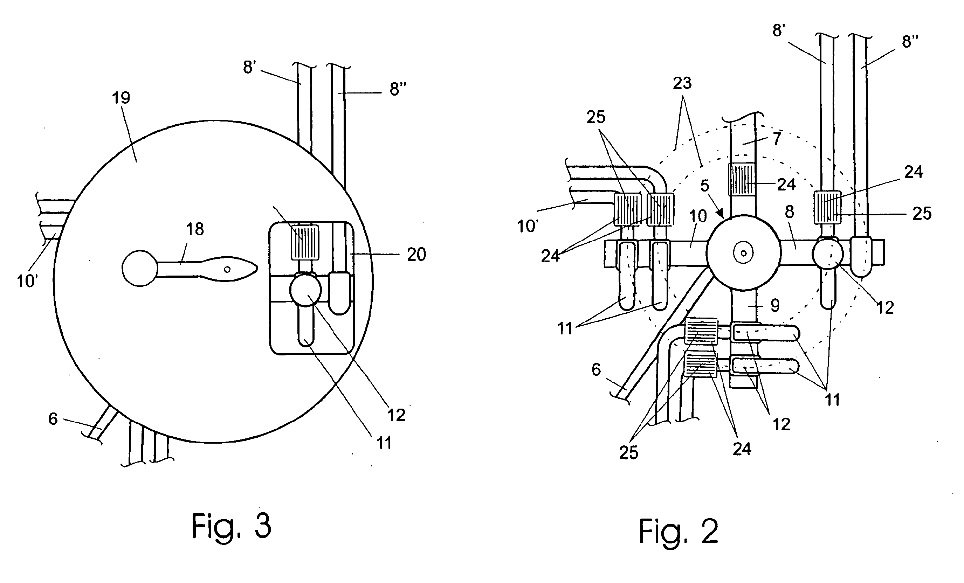

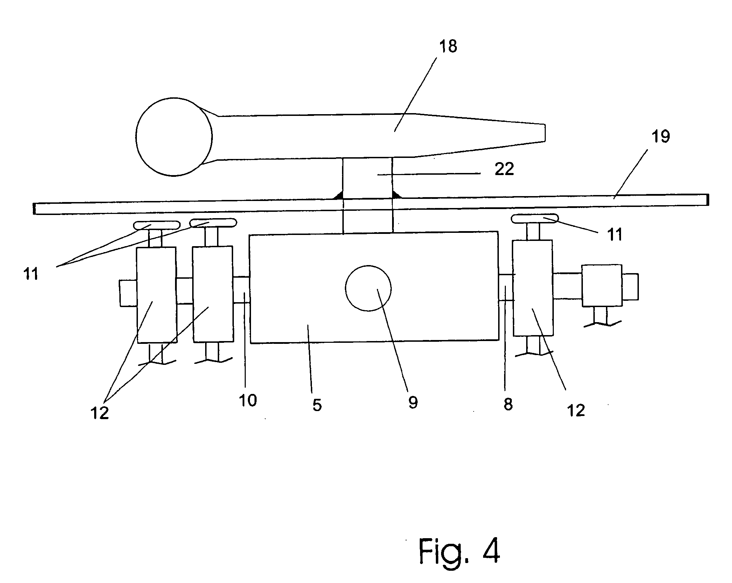

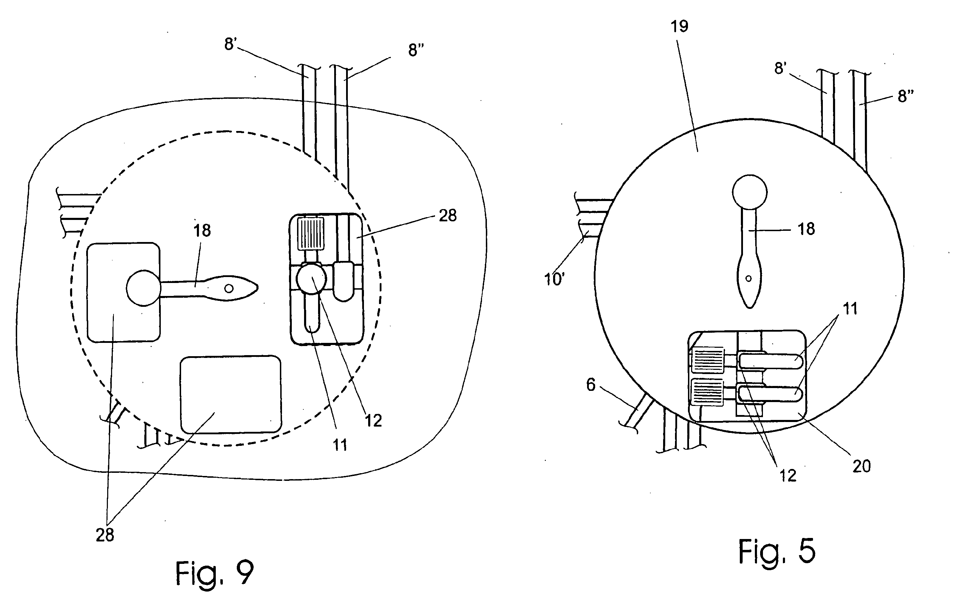

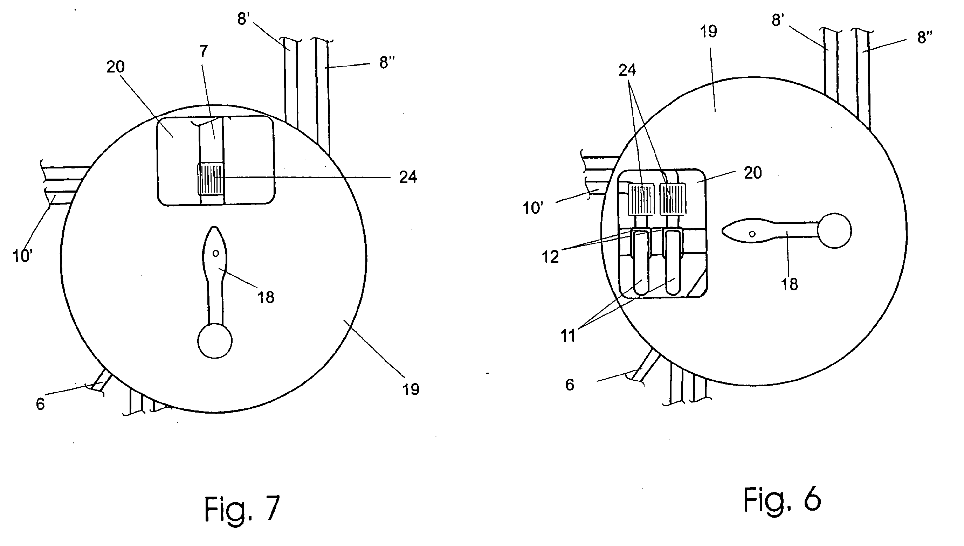

Das Verteilerventil 5 weist den Handbetätigungshebel 18 und eine Abdeckscheibe 19 mit Durchbruch 20, nicht in Fig. 1, sondern in Fig. 3 bis 9 dargestellt, auf. Die Anordnung und Funktion dieser Abdeckscheibe 19 mit Durchbruch 20 wird weiter unten näher erläutert.

An die Pumpe 3 ist die Rührwerksleitung 21 angeschlossen. Die weiteren übrigen Leitungen und Abschalthähne sind nicht weiter erläutert. Die einzelnen Funktionen ergeben sich aus dem Funktionsschema.

Die Betätigungselemente 11 der Absperrventils 12 sind, wie Fig. 2 zeigt, auf einem um die Ventilwelle 22 des Verteilerventils 5 geschlagenen Kreisbogens 23 und innerhalb des von der Abdeckscheibe 19 bedeckten Bereiches angeordnet. Die Abdeckscheibe 19 ist drehfest mit der Ventilwelle 22 des Verteilerventils 5 verbunden. An der Ventilwelle 22 ist drehfest der Handbetätigungshebel 18 angeordnet. In der Abdeckscheibe 19 ist ein Durchbruch 20, der sich in dem Abstand, der in etwa dem mittleren Abstand der Betätigungselemente 11 der Absperrventile 12' von der Ventilwelle 22 entspricht, von der Ventilwelle 22 befindet, angeordnet. Der Durchbruch 20 weist eine derartige Größe auf, dass nur die Betätigungselemente 11 bzw. das Betätigungselement 11 einer Abzweigleitung 7,8,9,10 durch den Durchbruch 20 von der Hand betätigbar ist, wie Fig. 3 bis 9 zeigen.

Der Handbetätigungshebel 18 des Verteilerventils 5 bzw. die Abdeckscheibe 19 wirken mit Einstellmarkierungen 24 und/oder Bezeichnungen 25 zusammen, um für den Bediener die Einstellung des Verteilerventils 5 für die jeweilige Funktionsart erkennbar und ablesbar zu machen. Im Ausführungsbeispiel sind diese Einstellmarkierungen 24 bzw. Einstellbezeichnungen 25 im Bereich der Absperrventile 12 mittels der Beschriftungsdarstellungen ausgebildet. Diese Bezeichnungen 24 und 25 sind rahmenfest angeordnet. Es ist jedoch auch möglich, diese Einstellmarkierungen 24 und Einstellbezeichnungen 25 auf der Abdeckscheibe 19 anzuordnen und dann einen zugeordneten Einstellpfeil oder Markierungspfeil rahmenfest anzubringen, so dass dann die jeweilige Einstellbezeichnung / Einstellmarkierung mit rahmenfest angeordneten Einstellmarkierungen zur Deckung gebracht werden müssen, um die jeweilige Stellung des Ventils 5 für die gewünschte Funktion, wie Behälter füllen, einspülen, reinigen oder spritzen einzustellen.

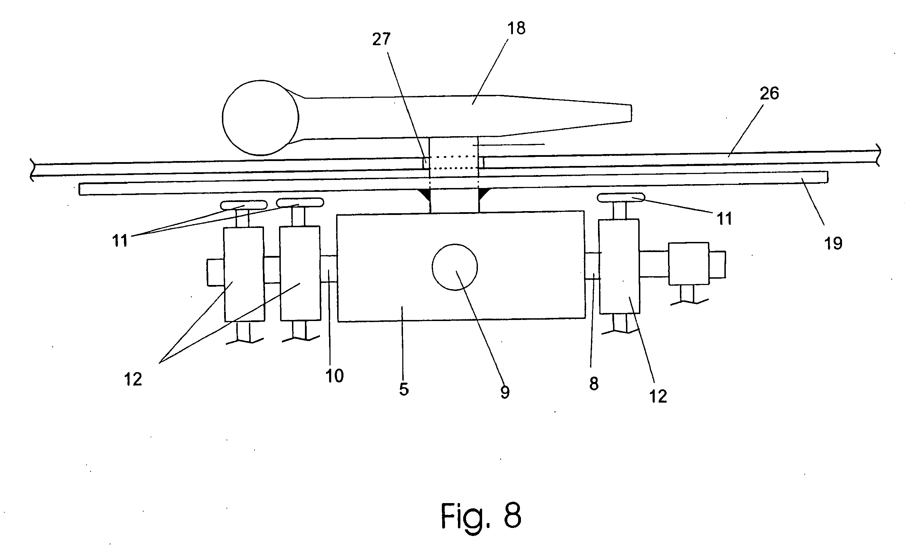

Das Ausführungsbeispiel gemäß Fig. 8 und 9 unterscheidet sich von dem Ausführungsbeispiel gemäß den Fig. 2 bis 7 dadurch, dass der Abdeckscheibe 19 eine Abdeckwand 26 zugeordnet ist. Hierbei sind die Leitungen 7,8,9,10 hinter einer Abdeckwand 26 angeordnet. Diese Abdeckwand ist an dem Rahmen angeordnet um eine geschützte Anordnung der Leitungen 7,8,9,10 und Ventile 5,12 zu erreichen. Hinter dieser Abdeckwand 26 sind die Ventile 12 und die Abzweigleitungen 7,8,9,10 angeordnet. Die Abdeckwand 26 weist den Ausschnitt 27 auf, durch den die Ventilwelle 22 des Verteilerventils 5 ragt. Der Betätigungshebel 18 ist vor der Abdeckwand 26 angeordnet. Im Ausführungsbeispiel ist die Abdeckscheibe 19 hinter der Abdeckwand 26 angeordnet. In der Abdeckwand 26 sind oberhalb der Handbetätigungselemente 12 der Absperrventile 11 Ausschnitte 26 angeordnet. Diese Ausschnitte 28 weisen zumindest eine derartige Größe auf, dass sie den Zugang zu den sich hinter der Abdeckwand 26 angeordneten Betätigungselementen 11 der Absperrventile 12 freigeben.

Für den Fall, dass einzelne Ausschnitte 28 in der Abdeckwand 26 angeordnet sind, ist die Anordnung so getroffen, dass die Ausschnitte 28 in der Abdeckwand 26 mit dem Durchbruch 20 in der Abdeckscheibe 19 wahlweise zur Einstellung bzw. Betätigung der Handbetätigungselemente 11 der Absperrventile 12 miteinander zur Deckung bringbar sind.

## Patentansprüche

1. Landwirtschaftliche Feldspritze mit einem Rahmen, einem Flüssigkeitsbehälter (1), einer angetriebenen Pumpe (2,3), zumindest einer Druckleitung (6-10) zumindest einer Saugleitung, zumindest einem in zumindest einer der Leitungen angeordneten Verteilerventil (5), von dem zumindest zwei als Abzweigleitungen (9,10) ausgebildete Leitungen über das eine Ventilwelle (22) mit Handbetätigungshebel (18) aufweisende Verteilerventil (5) abzweigen, wobei der Betätigungshebel (18) mit rahmenfest angeordneten Einstellmarkierungen (24) und/oder -Bezeichnungen (25) zusammenwirkt, wobei zumindest einer der Abzweigleitungen Handbetätigungselemente (11) aufweisende Absperrventile (12) zugeordnet sind, **dadurch gekennzeichnet, dass** eine drehfest mit der Ventilwelle (22) und/oder dem Handbetätigungshebel (18) des Verteilerventils (5) verbundene Abdeckscheibe (19) vorgesehen ist, dass die Betätigungselemente (11) der Absperrventile (12) auf einem um die Ventilwelle (22) geschlagenen Kreisbogen (23) und innerhalb des von der Abdeckscheibe (19) bedeckten Bereiches angeordnet sind, dass in der Abdeckscheibe (19) ein Durchbruch (20) angeordnet ist, der sich in dem Abstand von der Ventilwelle (22) befindet, der dem Abstand der Betätigungselemente (11) der Absperrventile (12) von der Ventilwelle (22) entspricht, und daß der Durchbruch (20) eine derartige Größe aufweist, dass nur die Betätigungselemente (11) oder das Betätigungselement (11) einer Abzweigleitung für die Handbetätigung freigegeben werden oder wird.

2. Feldspritze nach einem oder mehreren der vorstehenden Ansprüche, **dadurch gekennzeichnet, dass** eine mit dem Rahmen verbundene Abdeckwand (26) vorgesehen ist, dass hinter der Abdeckwand (26) die Ventile (12) und Abzweigleitungen angeordnet sind, dass die Abdeckwand (26) zumindest einen Ausschnitt (28) aufweist, durch den die Ventilwelle (22) des Verteilerventils (5) ragt, dass der Betätigungshebel (18) vor der Abdeckwand (26) angeordnet ist.

3. Feldspritze nach Anspruch 3, **dadurch gekennzeichnet, dass** die Abdeckscheibe sich vor der Abdeckwand (26) befindet.

4. Feldspritze nach Anspruch 3, **dadurch gekennzeichnet, dass** die Abdeckscheibe (19) sich hinter der Abdeckwand (26) befindet.

5. Feldspritze nach Anspruch 3, **dadurch gekennzeichnet, dass** der Ausschnitt (28) in der Abdeckwand (26) zumindest eine derartige Größe aufweist, dass er den Zugang zu den sich hinter der Abdeckwand (26) angeordneten Betätigungselementen (11) der Absperrventile (12) freigibt.

6. Feldspritze nach Anspruch 3, **dadurch gekennzeichnet, dass** für jedes Betätigungselement (11) der Absperrventile (12) und/oder für jedes Absperrventil (12) ein Ausschnitt (28) vorhanden ist.

7. Feldspritze nach Anspruch 3, **dadurch gekennzeichnet, dass** der Ausschnitt / die Ausschnitte (28) mit dem Durchbruch (20) in der Abdeckscheibe (19) wahlweise zur Deckung bringbar sind.

## Claims

1. Agricultural spraying machine having a frame, a liquid container (1), a driven pump (2, 3), at least one pressure line (6-10), at least one suction line, at least one distributor valve (5) disposed in at least one of the lines, from which distributor valve at least two lines that are configured as branch lines (9, 10) branch off via the distributor valve (5), which includes a valve shaft (22) with manual control lever (18), wherein the control lever (18) interacts with graduation marks (24) or adjustment references (25) that are disposed in a non-displaceable manner on the frame, wherein at least one of the branch lines have associated therewith shut-off valves (12) that include manual control members (11), **characterised in that** there is provided a cover disc (19) that is connected in a non-rotatable manner to the valve shaft (22) and/or the manual control lever (18) of the distributor valve (5), **in that** control members (11) of the shut-off valves (12) are disposed on an arc (23) described about the valve shaft (22) and internally of the region covered by the cover disc (19), **in that** in the cover disc (19) there is disposed an opening (20), which is situated at a spacing from the valve shaft (22) which corresponds to the spacing between the control members (11) of the shut-off valves (12) and the valve shaft (22), and **in that** the size of the opening (20) is such that only the control members (11) or a branch line for the manual control are or is exposed.

2. Agricultural spraying machine according to one or more of the preceding claims, **characterised in that** there is provided a cover wall (26) that is connected to the frame, **in that** the valves (12) and the branch lines are disposed behind the cover wall (26), **in that** the cover wall (26) includes at least one cutout (28), through which the valve shaft (22) of the distributor valve (5) extends, **in that** the control lever (18) is disposed in front of the cover wall.

3. Agricultural spraying machine according to claim 3, **characterised in that** the cover disc is situated in front of the cover wall (26).

4. Agricultural spraying machine according to claim 3, **characterised in that** the cover disc (19) is situated behind the cover wall (26).

5. Agricultural spraying machine according to claim 3, **characterised in that** the size of the cutout (28) in the cover wall (26) is at least such that it provides access to the control members (11) of the shut-off valves (12) that are disposed behind the cover wall (26).

6. Agricultural spraying machine according to claim 3, **characterised in that** there is a cutout (28) for each control member (11) of the shut-off valves (12) and/or for each shut-off valve (12).

7. Agricultural spraying machine according to claim 3, **characterised in that** the cutout / the cutouts (28) are optionally moveable to coincide with the opening (20) in the cover disc (19).

## Revendications

1. Pulvérisateur agricole comportant un châssis, un réservoir à liquide (1), une pompe (2, 3) entraînée, au moins une conduite de pression (6-10), au moins une conduite d'aspiration, au moins une vanne distributrice (5) installée dans l'une des conduites, d'où partent au moins deux conduites réalisées sous la forme de conduites de dérivation (9, 10) partant de la vanne distributrice (5) dont l'axe (22) est muni d'un levier d'actionnement (18),
le levier d'actionnement (18) coopérant avec des repères (24) et/ou des index (25) de réglage fixés au châssis, alors qu'au moins l'une des conduites de dérivation est équipée d'une vanne d'arrêt (12) ayant des éléments d'actionnement (11),
**caractérisé en ce qu'**
un disque de recouvrement (19) est relié solidairement en rotation à l'axe (22) de la vanne et/ou au levier d'actionnement à main (18) de la vanne distributrice (5),
les éléments d'actionnement (11) des vannes d'arrêt (12) sont installés sur un arc de cercle (23) autour de l'axe (22) de la vanne et dans la zone couverte par le disque de recouvrement (19),
le disque de recouvrement (19) a un passage (20) prévu à une distance de l'axe de vanne (22) qui correspond à la distance par rapport à l'axe (22) des éléments d'actionnement (11) des vannes d'arrêt (12), et
le passage (20) a une dimension telle que seuls les éléments d'actionnement (11) ou un seul élément d'actionnement (11) d'une conduite de dérivation est ou sont libéré(s) pour l'actionnement à la main.

2. Pulvérisateur agricole selon la revendication 1,
**caractérisé en ce qu'**
une paroi de recouvrement (26) reliée au châssis, derrière laquelle se trouvent les vannes (12) et les conduites de dérivation, comporte au moins un segment (28) traversé par l'axe (22) de la vanne distributrice (5), et
le levier d'actionnement (18) se trouve devant la paroi de recouvrement (26).

3. Pulvérisateur agricole selon la revendication 2,
**caractérisé en ce que**
le disque de recouvrement se trouve devant la paroi de recouvrement (26).

4. Pulvérisateur agricole selon la revendication 2,
**caractérisé en ce que**
le disque de recouvrement (19) se trouve derrière la paroi de recouvrement (26).

5. Pulvérisateur agricole selon la revendication 2,
**caractérisé en ce que**
le découpage (28) dans la paroi de recouvrement (26) a au moins une dimension libérant l'accès des éléments d'actionnement (11) des vannes d'arrêt (12) installées derrière la paroi de recouvrement (26).

6. Pulvérisateur agricole selon la revendication 2,
**caractérisé par**
une découpe (28) prévue pour chaque élément d'actionnement (11) des vannes d'arrêt (12) et/ou pour chaque vanne d'arrêt (12).

7. Pulvérisateur agricole selon la revendication 2,
**caractérisé en ce que**
la ou les découpes (28) peuvent être mises en concordance au choix avec le passage (20) du disque de recouvrement (19).
